# EUROPEAN PATENT SPECIFICATION

(11) **EP 4 380 854 B1**
(45) Date of publication and mention of the grant of the patent: **15.10.2025**
(21) Application number: 22751467.6
(22) Date of filing: 21.07.2022
(51) Int. Cl.: B63B 39/06, B63H 25/24

(54) **VESSEL STABILIZER**
SCHIFFSSTABILISATOR
STABILISATEUR DE NAVIRE

(30) Priority: 02.08.2021 NO 20210955
(43) Date of publication of application: 12.06.2024
(73) Proprietor: Sleipner Motor AS, 1610 Fredrikstad (NO)
(72) Inventor: ERIKSEN, Tore, 1675 Kråkerøy (NO)
(74) Representative: LIGL IP Consult AS
(86) International application number: PCT/NO2022/050181
(87) International publication number: WO 2022/240297

(56) References cited:
- WO-A1-2017/130100
- JP-B2- 5 093 753
- US-A- 5 631 511
- US-A1- 2005 042 944
- US-A1- 2010 083 887
- US-A1- 2016 121 978
- US-A1- 2020 361 582

## Description

### TECHNICAL FIELD

The present invention relates to stabilizers for vessels, and more specifically to stabilizers used to reduce roll at anchor and/or when cruising, where the stabilizers have fins, trim tabs or any other shape that may contribute to the stabilization of the vessel when rotated.

### BACKGROUND

The art of reducing the unpleasant and at times dangerous roll motion of boats and ships in waves have evolved over many years, and there are many principle technologies used with varying benefits and results for different conditions, type of watercraft and not least cost of implementation and operation. Such different systems include fin stabilizers, gyro stabilizers and bilge tanks to mention the most common ones.

The traditional stabilization systems used in passenger vessels, naval vessels etc., were generally designed for use in underway situations and mostly for boats cruising in displacement mode and thereby in relatively low velocities. The watercrafts that have traditionally been using stabilizers, have also by their size and hull shapes generally had long roll times, thereby requiring relatively slow acting stabilization system, where counter forces are applied to the waves forces over relatively long time periods. Over the last 15 years, the market has evolved to a require roll stabilization when the watercraft is at anchor, i.e. not having any forward motion, as well as stabilization systems being installed in much faster boats, including planning boats. These changes create many new challenges and issues, as explained below.

Traditionally fin stabilizers have been operated by hydraulics. However, with advances in technology, electric operation of stabilizers seems to become more common. Electrically powered stabilizers have advantages, especially at anchor since they can be driven by an on-board battery.

International patent publication WO2017130100 A1 discloses a stabilizer for a boat comprising an electric motor and a planetary reduction gearing arranged co-axially in a common housing.

International patent publication WO2017130100 A1 discloses a stabilizer for a vessel with a hollow electrical motor, a gearbox arranged above the motor, and a fin axle arranged coaxially inside the electric motor.

However, some challenges still remain to be solved.

One such problem is that when the stabilizers are operated, the stabilizers tend to generate an unpleasant noise for the crew and the passengers. This becomes especially evident at anchor when there is no noise from propulsion engines. Further, this noise may appear more dominant is some areas of the boat than others, and the noise level may not be a direct function of the distance from the electric stabilizer. I.e., noise may be very disturbing at the sun deck or in a toilet, while not causing any problems in a cabin closer to the stabilizer.

Although the introduction of electrical stabilizers has made it possible to reduce installation time and maintenance, the noise from stabilizer operation remains.

A further problem with prior art stabilizers is that it is challenging to perform modifications to the stabilizer unit after installation in the boat. The stabilizer is installed through the hull of the boat, and permanently fixed to the hull. Replacement may require cutting the hull around the present installation and re-making the hull to make it fit the replacement stabilizer. Modifications or replacements may be needed e.g., if a different torque is needed to improve stabilizer performance. This may be related to the use of different fin types.

Since hull space in most cases is limited, the size of the stabilizer with regards to its stabilizing capabilities, i.e. torque should preferably be reduced with regards to prior art, especially in the direction perpendicular to the bottom of the hull.

When the vessel operates in shallow water, and close to piers, as is often the case at anchor, the fins may easily hit underwater obstacles that could seriously damage the stabilizer.

There seem to be a need for preparing the stabilizer devices for failure situations and how the consequences of serious failures can be reduced. Fin stabilizers stuck in wrong positions, or loose fins could make the boat very hard to manoeuvre, especially in rough sea.

There is also a need to reduce time and costs for general maintenance of the electric motor, the reduction gear and the main bearings.

US2020361582 discloses the features of the preamble of claim 1, an electric fin stabilizer for a vessel.

US2005042944 discloses a shock-proof electric marine engine for a marine (Navy) ship, comprising a stator and a rotor in a housing, whereby the stator and the rotor are connected in such a way that they are rotatably displaceable in a counter direction and in a radial/axial manner with limited slack.

### SHORT SUMMARY

A goal with the present invention is to overcome the problems of prior art, and to disclose an improved vessel stabilizer.

The invention is a vessel stabilizer according to the independent claims.

The following technical effects may be obtained by the stabilizer according to embodiments of the invention;
- The noise from stabilizer operation perceived by the crew and passengers onboard the vessel may be reduced.
- Reduction of impact on hull and hull fixing from structural strokes with high torque against the stabilizer element, e.g., against the fin tip. This can be seen as a built in shock absorber.
- Water sealing is achieved while withstanding large torques in different directions and simultaneously reducing structural noise when the stabilizer is operating.
- Modifications may be made to the stabilizer without re-making the hull.
- The stabilizer has a small size compared to prior art stabilizers
- The stabilizer may be more fail safe in certain situations.
- If a serious failure occurs, the consequences of the failure may be reduced.
- Time and costs for maintenance may be reduced.

### BRIEF DESCRIPTION OF THE DRAWINGS

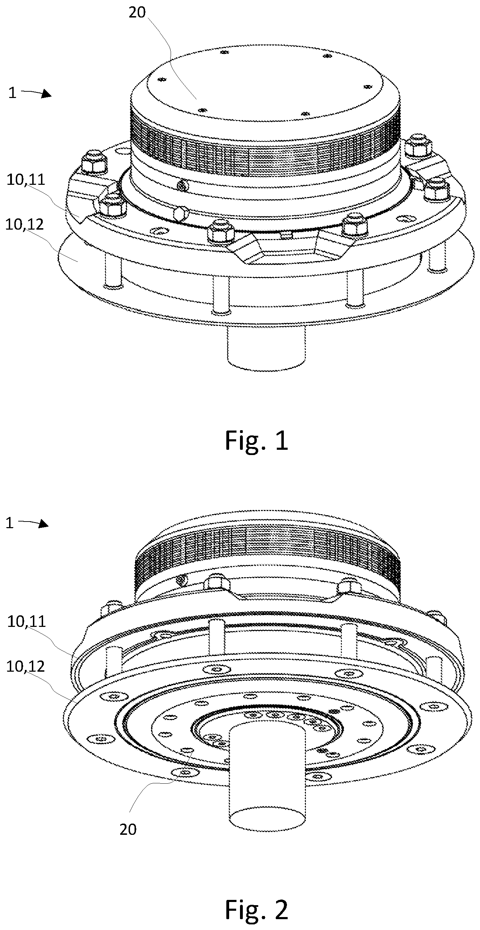

Fig. 1 illustrates in a perspective view from above a vessel stabilizer (1) according to an embodiment of the invention. The inner part (11) and outer part (12) of the base unit (10) are fixed to the hull of the vessel. The drive unit (20) is vibrationally floating inside the base unit.
Fig. 2 illustrates in a perspective view from below the same vessel stabilizer (1) as in Fig. 1.

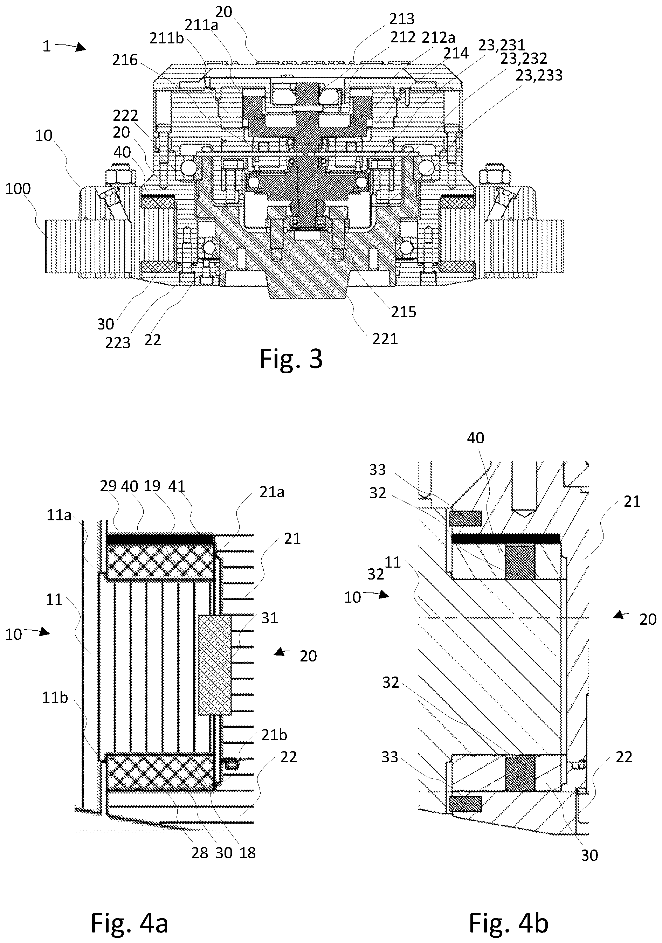

Fig. 3 is a cross sectional view of the vessel stabilizer (1) illustrated in Fig. 1. Elements with similar hatching are, at least in some respects, mechanically fixed to each other and may rotate or otherwise move with respect to each other. E.g., the drive unit (20) is vibrationally floating inside the base unit (10), the output element (221) and the inner shaft (212) rotate inside the drive unit (20), although with different speed.
Fig. 4a illustrates in a cross section view a detail of the vessel stabilizer (1) illustrated in Fig. 1, where the drive unit (20) is arranged vibrationally floating inside the base unit (10).
Fig. 4b illustrates in a cross section view a detail of the vessel stabilizer (1), in a further embodiment that may be combined with the embodiment in Fig. 4a, where the vessel stabilizer (1) comprises one or more second support elements (32) configured to prevent excessive compression of the first and/or second insulation element (30, 40) in the vertical direction, and one or more third support elements (33) configured to prevent excessive movement of the drive unit (10) relative to the base unit (10) in the radial direction.

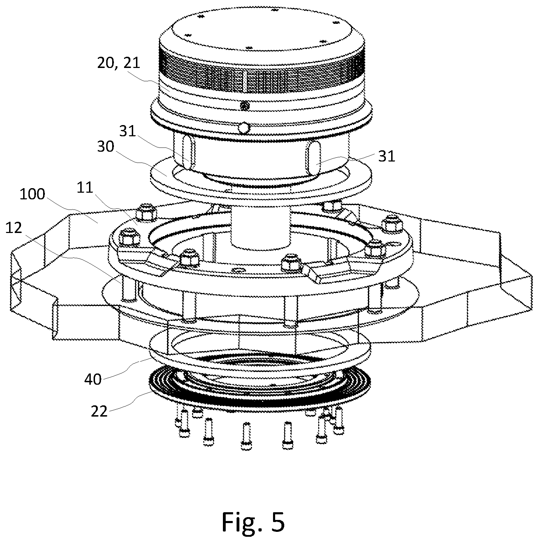

Fig. 5 illustrates in an exploded perspective view from above of the vessel stabilizer of Fig. 1, the main elements for arranging the base unit (10) in the hull (100) and for arranging the drive unit (20) in the base unit (10).

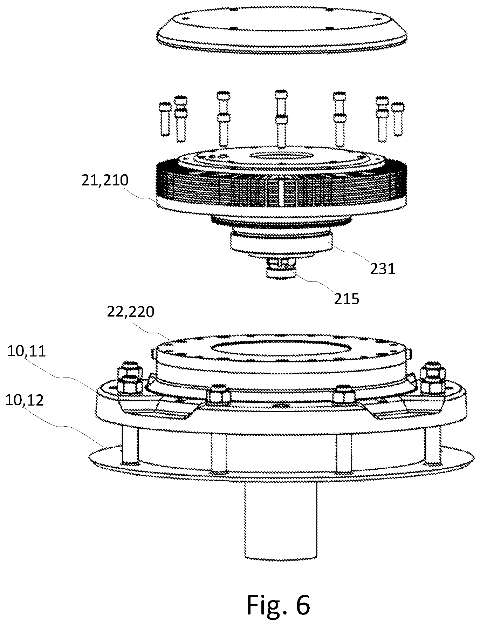

Fig. 6 illustrates in illustrates in an exploded perspective view from above of the vessel (1) stabilizer of Fig. 1, the inner and outer parts (21, 22) of the drive unit (20), and how the inner part (21) easily can be removed and inserted into the outer part (22) from the inside of the hull without removing the base unit (10) or the stabilizer element, e.g. the fin, from the hull.

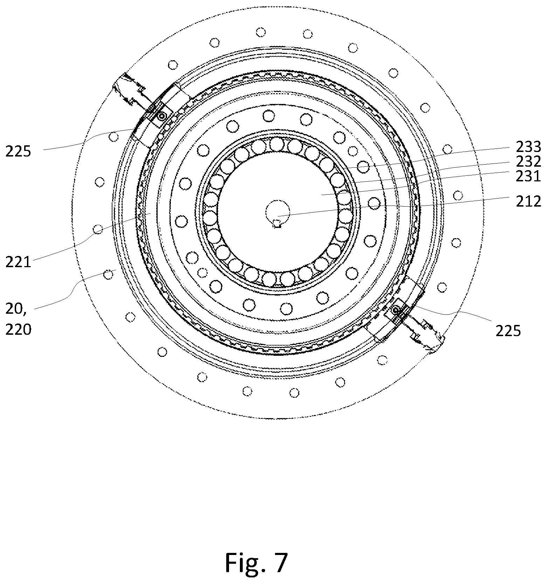

Fig. 7 is a cross-section view, perpendicular to the cross-section view in Fig. 3, illustrating among other elements, the locking elements (225) arranged to lock the output element, and the stabilizer element to the lower inner part (220) of the drive unit (20) in an emergency situation, or when performing maintenance operations when the hull is submerged in water.

### EMBODIMENTS OF THE INVENTION

In the following description, various examples and embodiments of the invention are set forth in order to provide the skilled person with a more thorough understanding of the invention. The specific details described in the context of the various embodiments and with reference to the attached drawings are not intended to be construed as limitations. Rather, the scope of the invention is defined in the appended claims.

The embodiments described below are numbered. In addition, dependent embodiments defined in relation to the numbered embodiments are described. Unless otherwise specified, any embodiment that can be combined with one or more numbered embodiments may also be combined directly with any of the dependent embodiments of the numbered embodiment(s) referred to.

The term vessel used in this document are meant to cover all ships, boats, and installations floating on water.

The term vibrationally floating used in this document means that one element, e.g., the base unit (10) is not exposed to all the mechanical oscillations of another element e.g., the drive unit (20). The terms vibrationally damped or vibrationally insulated may be interchangeably used.

In an independent embodiment EM1, the invention is a vessel stabilizer (1) comprising;
- a base unit (10) configured to be fixedly mounted to a hull (100) of the vessel,
- a drive unit (20) comprising a motor (211) and an output element (221), wherein the motor (211) is configured to rotationally drive the output element (221) and the output element (221) is configured to be fixed to a stabilizer element outside the hull, and
- a first insulation element (30) arranged between the base unit (10) and the drive unit (20), wherein the base unit is vibrationally insulated from the drive unit by the first insulation element (30).

A major contribution to the noise perceived onboard the vessel in varying degree, has been identified as structural noise during the development of the vessel stabilizer. Depending on the natural frequency or eigenfrequency of the equipment and gear aboard the ship, vibrations from the electric generator will propagate as structural noise, i.e., vibrations, through the hull until it reaches elements with a matching natural frequency. According to the invention this can be mitigated by reducing the coupling of structural noise from the electric stabilizer to the hull by means of the first insulation element.

In a first dependent embodiment, the hull base (10) has a through hole for the drive section (20) and a first base surface (18) around the through hole, wherein the drive section (20) comprises a first drive surface (28) along the perimeter of the drive unit, wherein
- the first base surface (18) and the first drive surface (28) are facing each other, wherein the first insulation element (30) is arranged between the first base surface (18) and the first drive surface (28).

In a second dependent embodiment, that may be combined with the first dependent embodiment, the first base surface (18) and the first drive surface (28) are overlapping in a cross-sectional view perpendicular to a rotational axis of the output element (221).

In an embodiment EM2, that may be combined with EM1, the vessel stabilizer comprises;
- a second insulation element (40) arranged between the base unit (10) and the drive unit (20), wherein the base unit is vibrationally insulated from the drive unit by the first and second compressible elements (30, 40).

In a first dependent embodiment, the hull base (10) has a through hole for the drive section (20) and a first base surface (18) around the through hole, wherein the drive section (20) comprises a second drive surface (28) along the perimeter of the drive unit, wherein
- the second base surface (19) and the second drive surfaces (29) are facing each other, wherein the second insulation element (40) is arranged between the second base surface (19) and the second drive surface (29).

In a second dependent embodiment, that may be combined with the first dependent embodiment, the second base surface (19) and the second drive surface (29) are al view in a cross section perpendicular to a rotational axis of the output element (221).

In a third dependent embodiment, that may be combined with the first or second dependent embodiment, the first and second base surfaces (18, 19) face in opposite directions.

In a fourth dependent embodiment, that may be combined with any of the first to third dependent embodiment, the first and second drive surfaces (28, 29) face in opposite directions.

In a fifth dependent embodiment, that may be combined with any of the first to fourth dependent embodiments, the base unit (10) comprises a first base protrusion (11a) and the drive unit comprises a first drive protrusion (21a), wherein the first insulation element (30) is delimited by the first base protrusion in a first radial direction and by the first drive protrusion in the opposite direction, wherein the first base protrusion and the first drive protrusion are arranged in first and second planes perpendicular to the axial direction of the output element (221), and not in contact with the first insulation element (30) in the region between the first and second planes.

In a sixth dependent embodiment, that may be combined with any of the first to fifth dependent embodiments, the base unit (10) comprises a second base protrusion (11b) and the drive unit comprises a second drive protrusion (21b), wherein the second insulation element (40) is delimited by the second base protrusion in a first radial direction and by the second drive protrusion in the opposite direction, wherein the second base protrusion and the second drive protrusion are arranged in third and fourth planes perpendicular to the axial direction of the output element (221), and not in contact with the second insulation element (40) in the region between the third and fourth planes.

Surprisingly the above feature may have the effect of reducing the structure-borne energy by as much as 70 - 80%, and obviously have a large impact on resonance from the structure-borne energy in various locations aboard the vessel.

In a seventh dependent embodiment, that may be combined with any of the first to sixth dependent embodiments, any of the first base protrusion, second base protrusion, first drive protrusion and second drive protrusion are inclined in the axial direction of the output element (221), to simplify assembly.

In an embodiment EM3, that may be combined with EM1 or EM2, the vessel stabilizer comprises one or more first support elements (31), arranged in grooves or slits facing each other in the base unit (10) and the drive unit (20) in a plane perpendicular to a rotational axis of the output element.

The one or more first support elements (31) supports the drive unit (20) rotationally as well as radially with regards to the base unit (10).

In an embodiment EM4, that may be combined with any of EM1 to EM3, a stiffness between the drive unit (20) and the base unit (10) is configured to increase with increasing torque on the drive unit relative to the base unit (10) in the axial or vertical direction.

In a first dependent embodiment, the vessel stabilizer comprises one or more second support elements (32), wherein the one or more second support element (30, 40) has a higher stiffness than the first and or second insulation element (30, 40).

The one or more second support elements (32) are configured to prevent excessive compression of the first and/or second insulation element (30, 40) and to ensure that the drive unit (20) cannot touch the base unit (10) for large vertical, or axial, forces acting on the stabilizer.

In a second dependent embodiment, that may be combined with the first dependent embodiment, the one or more second support elements (32) are arranged integrated with the first and/or second insulation element (30, 40).

In a third dependent embodiment, that may be combined with the first or second dependent embodiments, the height of the one or more second support elements (32) is lower than the height of the first and/or second insulation element (30, 40).

In a fourth dependent embodiment, that may be combined with any of the first to third dependent embodiments, the one or more second support elements (32) are ring shaped.

In an embodiment EM5, that may be combined with any of EM1 to EM4, a stiffness between the drive unit (20) and the base unit (10) is configured to increase with increasing torque on the drive unit relative to the base unit (10) in the radial direction.

In a first dependent embodiment, the vessel stabilizer comprises one or more third support elements (33), wherein the one or more third support elements (30, 40) has a higher stiffness than the one or more first support elements (31).

The one or more third support elements (33) are configured to prevent excessive movement of the drive unit (10) relative to the base unit (10) in the radial direction. and to ensure that the drive unit (20) cannot touch the base unit (10) for large radial forces acting on the stabilizer.

In a second dependent embodiment, that may be combined with the first dependent embodiment, the one or more third support elements (33) are arranged integrated with the one or more first support elements (31).

In a third dependent embodiment, that may be combined with the first or second dependent embodiments, the width of the one or more third support elements (33) is smaller than the width of the one or more first support elements (31), in a cross section.

In a fourth dependent embodiment, that may be combined with any of the first to third dependent embodiments, the one or more third support elements (33) are ring shaped.

Any of the second or third support elements can be made in e.g., Polyoxymethylene (POM).

In an embodiment EM6, that may be combined with any of EM1 to EM5, the drive unit is arranged vibrationally floating on the first and/or second insulation element (30, 40) with respect to the base unit.

In an embodiment EM7, that may be combined with any of EM1 to EM6, the first/and or second insulation element (30, 40) is/are configured to be arranged permanently compressed between the drive unit (20) and the base unit (10).

In a first dependent embodiment, the first insulation element (30) is compressed according to any of the following ranges; 30 - 80%, 40 - 70% or 50 - 60% of its static load limit.

In a second dependent embodiment, that may be combined with the first dependent embodiment, the vessel stabilizer (1) comprises pre-tensioning means (22) configured to keep the first and/or second insulation element (30, 40) compressed in the axial direction of the output element (221) when the drive section (20) is arranged through the hull base (10).

In a third dependent embodiment, that may be combined with any of the first to second dependent embodiments, the drive unit (20) comprises an inner part (21) and an outer part (22) wherein the second drive surface (29) is arranged on a flange of the inner part and the first drive surface (28) is arranged on a flange of the outer part, wherein the inner and outer parts are configured to be forced together and fastened.

In a fourth dependent embodiment, that may be combined with any of the first to second dependent embodiments, the base unit (10) comprises an inner part and an outer part wherein the second base surface is arranged on a flange of the inner part and the first base surface is arranged on a flange of the outer part, wherein the inner and outer parts are configured to be forced together and fastened.

In a fifth dependent, that may be combined with any of the first to fourth dependent embodiments, any of the first base surface, second base surface, first drive surface and second drive surface comprise one or more ring-formed protrusions.

In a seventh dependent embodiment, that may be combined with any of the first to fifth dependent embodiments, the first and/or second insulation element (30, 40) is/are made from a polyurethan elastomer with a closed cellular pore structure.

In a sixth dependent embodiment, that may be combined with any of the first to fifth dependent embodiments, the first and/or second insulation element (30, 40) is/are made in vibrationally damping material configured to reduce the impact generated and steady state noise from the electric actuator.

Vibrationally damping materials may be e.g.; Rubber, Polyurethane, Polyvinyl chloride, alone or in combination with other damping materials and as part of a composite vibrational damping structure.

In a seventh dependent embodiment, that may be combined with any of the first to fifth dependent embodiments, the first and/or second insulation element (30, 40) is/are made from a polyurethan elastomer with a closed cellular pore structure.

In an eight seventh dependent embodiment, that may be combined with any of the first to seventh dependent embodiments, the first and/or second insulation element (30, 40) is/are integrated with the base unit (10) or the drive unit (20).

In a ninth dependent embodiment, that may be combined with any of the first to seventh dependent embodiments, the vessel stabilizer (1) comprises an insulation block comprising the first and/or second insulation element (30, 40), wherein the insulation block is configured to be fixed to the base unit (10) and the drive unit (20).

The insulation block may be factory molded. Different insulation blocks may have different damping and strength characteristics, while still sharing physical dimensions.

In an embodiment EM8, that may be combined with any of EM1 to EM7, the vessel stabilizer (1) comprises the features of any of the embodiments EA1 to EA5 below.

In an independent embodiment EA1, the invention is a vessel stabilizer (1) comprising;
- a motor (211) and an output element (221), wherein the motor (211) is configured to rotationally drive the output element (221) and the output element (221) is configured to be fixed to a stabilizer element outside a hull of a vessel, and
- a strain wave gear system (23) comprising a wave generator (231), a flexible spline (232) and a fixed spline (233), wherein the drive unit (20) comprises
- an upper inner part (210) comprising;
- the motor (211) and the wave generator (231), and
- a lower inner part (220) comprising
- the output element (221),
- the flexible spline (232) and
- the fixed spline (233), wherein the fixed spline (233) is fixed to the output element (221), and the upper inner part (210) is configured to be removably assembled to the lower inner part (220) from inside the hull.

In a first dependent embodiment, the upper inner part (210) is fixed to the lower inner part (220) with bolts.

In a second dependent embodiment, that may be combined with the first dependent embodiment, the output element (221) is rotationally supported by upper and lower bearings (222, 223) arranged in the lower inner part (220) of the drive unit (20), and the wave generator (231) is arranged between the upper and lower bearings (222, 223) when the drive unit (20) is assembled.

In an embodiment EA2, that may be combined with EA1, the upper inner part (210) comprises an inner shaft (212) comprising a rotor section (212a) with extended diameter fixed to a rotor (211a) of the electric motor (211), wherein the inner shaft is further fixed to the wave generator (231), wherein the inner shaft (212) is supported in the upper inner part (210) by upper and middle rotational bearings (213 ,214 ) arranged above and below the rotor section (212a).

In a first dependent embodiment, the inner shaft (212) is supported in the lower inner part (220) by a lower rotational bearing (215) arranged below the wave generator (231), wherein the lower rotational bearing (215) is longitudinally fixed to the inner shaft (212) and removably assembled with the upper inner part (220).

In a second dependent embodiment, that may be combined with the first dependent embodiment, the upper inner part (220) comprises a retaining ring, arranged below the lower bearing, and configured to longitudinally lock the wave generator (231) and lower bearing to the inner shaft (212).

In an embodiment EA3, that may be combined with EA1 or EA2, the vessel stabilizer (1) comprises;
- a base unit (10) configured to be fixedly mounted to the hull (100), the drive unit (20) is configured to be removably assembled vibrationally floating with respect to the base unit (10).

In an embodiment EA4, that may be combined with any of EA1 to EA3, the upper inner part (210) comprises a brake element (216) arranged on the inner shaft (212) between the wave generator (231) and the rotor section (212a) and configured to act on the lower side of the rotor section to brake or lock the inner shaft as needed.

In a first dependent embodiment, the brake element is electrically operated and normally on.

In an embodiment EA5, that may be combined with any of EA1 to EA4, the vessel stabilizer (1) comprises a locking element (225) configured to lock the output element (221) to the lower inner part (220) to prevent rotation of the stabilizer element.

In a first dependent embodiment, the locking element (225) and output element (221) comprises teeth that mesh when the locking element (225) is operated.

In a second dependent embodiment, that may be combined with the first dependent embodiment, the locking element (225) is arranged in a slot of the lower inner part (220) and arranged to move radially when operated.

In an embodiment EA6, that may be combined with any of EA1 to EA5, the vessel stabilizer (1) comprises the features of any of the embodiments EM1 to EM7 above.

In any of the embodiments above the stabilizer element is configured to extend below the hulls water line, and it may typically have the shape of a fin, a trim tab or any other shape that may contribute to the stabilization of the vessel when rotated.

In a specific embodiment described with reference to the accompanying drawings, Fig. 1 and 2 illustrate the assembled vessel stabilizer (1) in two different perspective views. The drive unit (20) extends through the base unit (10).

More details are given in Fig. 3, where the main components of the vessel stabilizer can be seen in a section view.

For a new installation, the vessel stabilizer comprising both the base unit and the drive unit may be pre-assembled and ready to be mounted in the vessel. In a circular through hole of the hull (100) the base unit (10) is fixedly mounted. The base unit (10) comprises an inner circular part (11) fitting into the through hole of the hull (100) with a circular flange that covers the inside of the hull, radially outside the perimeter of the hole. The base unit (10) further comprises an outer circular part (12) in the form of a ring-shaped disk that covers the outside of the hull outside the perimeter of the hole, and facing the circular flange on the opposite side of the hull. The base unit is mounted to the hull by first entering the inner part through the hull from the inside of the vessel, mounting the outer part from outside, and securing the two parts to each other with bolts. Further a sealing material is injected through openings to inside to make sure the base unit is thoroughly sealed to the hull. The necessary electrical connections for power and control are established and a fin or a foil (not shown) is then mounted outside the hull to the output element (221) of the vessel stabilizer.

The base unit (10) comprises a through hole and first and second ring-shaped base surfaces (18, 19), respectively directed inwardly and outwardly with regards to the hull.

The drive unit (20) is arranged through the through hole in the base unit (10) and fixed to the base unit (10) along its perimeter as explained further below.

The drive unit (10) comprises an inner circular part (21) fitting into the through hole of the base unit (10) where the outer diameter of the inner circular part (21) is smaller than the inner diameter of the through hole of the base unit (10).

The inner part (21) of the drive unit (10) has a circular flange that covers the inside of the base unit, radially outside the perimeter of the hole through the base unit. The drive unit (20) further comprises a circular outer part (22) in the form of a ring-shaped disk that covers the outside of the base unit (10) radially outside the perimeter of the hole through the base unit, and facing the circular flange on the opposite side of the hull. The inner and outer parts are arranged adjacent each other and secured with bolts.

The circular flange of the inner circular part (21) has a circular first drive surface (28) facing towards the first base surface (18), and a circular open-ring shaped first insulation element (30) is arranged between the two surfaces to isolate the drive unit from the base unit.

A similar second insulation element (4) is arranged between the second ring shaped base surface (19) and a circular ring shaped second drive surface (29) of the circular flange of the inner circular part (21).

The first and second nose reduction elements (30) are made in elastomer with a closed cellular pore structure. Further, the first and second nose reduction elements (30) are compressed when the first and second drive surfaces are forced towards each other by mounting the outer part (22) to the inner part (21) of the drive unit.

If fine-tuning of compression is required, e.g., as a result of varying requirements for different installations with different requirements, or for varying dimensions of the insulation material, this can be achieved with shims (41) as indicated in Fig. 4, which is an enlarged section view of a detail in fig. 3.

In the radial direction, the base unit (10) and the drive section (20) interface the first and second compressible elements (30, 40) from different sides, to easy assembly. However, they do not interface the first and second compressible elements (30, 40) in the same plane, where the plane here is in the radial direction. This is achieved by first and second base protrusions (11a, 11b) radially interfacing the first and second compressible elements (30, 40) radially inwardly, and ring-formed first and second drive protrusions (21a, 21b) radially interfacing the first and second compressible elements (30, 40) radially outwardly, wherein all the protrusions have a height smaller than half the thickness of the corresponding first and second compressible elements (30, 40). The protrusions may be inclined to ease mounting.

The first base surface and the first drive surface (18, 28) comprises in this embodiment circular protrusions that, when pre-tensioned, further contribute in sealing the inside of the hull from the outside of the hull in the interface between the base unit and the drive unit.

The vessel stabilizer comprises four first support elements (31), arranged between the inner part of the base unit (10) and the inner part of the drive unit (20), both comprising grooves or slits to fit the first support elements (31). The first support elements are made in elastomer.

The present arrangement significantly reduces vibrations in the hull caused by operation of the stabilizer, which in turn reduces the audible noise. The solution can handle large forces that are present when the fin or foil is rotated opposite the roll or pitch directions. I.e., the rotational torque around the fin shaft will try to rotate the drive unit with regards to the base unit. In addition, a torque perpendicular to the fin shaft will attempt to rotate the drive unit, resulting in a lift one side of the drive unit and a compression on the opposite side. Without the elements of the invention, the described torques could lead to sudden unalignments reducing efficiency of noise reduction, and even worse causing structural damages and water penetration.

The inner part (21) of the drive unit (20) itself can be split for easy maintenance or upgrade of the electric motor and the reduction gear as illustrated in Fig. 5. This can be achieved from the inside of the hull without removing the drive unit (20) from the base unit (10).

The inner part (21) comprises a lower inner part (220) and an upper inner part (210) that are bolted together in normal operation. When un-bolted, the upper inner part (210) can be lifted away from the lower inner part (220), when the lower inner part is still fixed to the base unit (10), as seen in Fig. 6. If this operation is performed at sea, the fin should initially be secured relative to the hull by screwing the locking elements (225) normally hidden in slots in the lower inner part (220) radially inward until the teeth of the locking elements (225) mesh with the teeth of the output element (221)

The upper inner part comprises an electric motor (211) while the lower inner part (220) comprises the output element (221).

Further, the drive unit comprises a strain wave gear system (23) comprising a wave generator (231), a flexible spline (232) and a fixed spline (233). The wave generator is coaxially connected to the rotor of the electric motor (211) above, while the fixed spline (233) is coaxially connected to the output element (221) below. The output element (221) is rotationally supported by upper and lower bearings (222, 223) arranged in the lower inner part (220) of the drive unit (20), and the fixed spline is arranged inside the output element (221) between the upper and lower bearings (222, 223).

The inner drive unit comprises an inner shaft (212) interconnecting the rotor (211a) of the electric motor (211) and the wave generator (231). The rotor is arranged on a rotor section of the inner shaft with an extended diameter. Above and below the rotor section the inner shaft is supported by rotational bearings in the upper inner part (210), such that the inner shaft is always aligned with the upper inner part, also when the upper inner part is split from the lower inner part (220). This makes assembling or re-assembling the upper inner part and the lower inner part easier.

Further, a lower rotational bearing (213) is arranged and longitudinally fixed at the lower end of the inner shaft by a retaining ring, below the wave generator. The lower rotational bearing will be supported by the fixed spline (233) once the upper and lower inner parts are assembled.

A brake element (216) is arranged on the inner shaft between the wave generator and the rotor section and is configured to act on the lower side of the rotor section to brake or lock the inner shaft as needed. The brake element is normally locked, i.e., it is active when power is off.

In the exemplary embodiments, various features and details are shown in combination. The fact that several features are described with respect to a particular example should not be construed as implying that those features by necessity have to be included together in all embodiments of the invention. Conversely, features that are described with reference to different embodiments should not be construed as mutually exclusive. As those with skill in the art will readily understand, embodiments that incorporate any subset of features described herein and that are not expressly interdependent have been contemplated by the inventor. However, explicit description of all such embodiments would not contribute to the understanding of the principles of the invention, and consequently some permutations of features have been omitted for the sake of simplicity or brevity. The invention is defined by appended claims.

## Claims

1. A vessel stabilizer (1) comprising;
- a base unit (10) configured to be fixedly mounted to a hull (100) of the vessel,
- a drive unit (20) comprising a motor (211) and an output element (221), wherein the motor (211) is configured to rotationally drive the output element (221) and the output element (221) is configured to be fixed to a stabilizer element outside the hull,
**characterized in that**
- a first insulation element (30) is arranged between the base unit (10) and the drive unit (20), and wherein the base unit is vibrationally insulated from the drive unit by the first insulation element (30).

2. The vessel stabilizer of claim 1, wherein the base unit (10) has a through hole for the drive unit (20) and a first base surface (18) around the through hole, wherein the drive unit (20) comprises a first drive surface (28) along the perimeter of the drive unit, and wherein the first base surface (18) and the first drive surface (28) are facing each other, wherein the first insulation element (30) is arranged between the first base surface (18) and the first drive surface (28).

3. The vessel stabilizer of claim 1 or 2, wherein the first base surface (18) and the first drive surface (28) are overlapping in a first direction parallel to the rotational axis of the output element (221).

4. The vessel stabilizer of claim 2 or 3, comprising a second insulation element (40) arranged between the base unit (10) and the drive unit (20), wherein the base unit is vibrationally insulated from the drive unit by the first and second insulation elements (30, 40).

5. The vessel stabilizer of claim 4, wherein the base unit (10) has a through hole for the drive unit (20) and a first base surface (18) around the through hole, wherein the drive unit (20) comprises a second drive surface (28) along the perimeter of the drive unit, wherein the second base surface (19) and the second drive surfaces (29) are facing each other, wherein the second insulation element (40) is arranged between the second base surface (19) and the second drive surface (29), wherein the second base surface (19) and the second drive surface (29) are overlapping in a first direction parallel to the rotational axis of the output element (221), wherein the first and second base surfaces (18, 19) face in opposite directions, and wherein the first and second drive surfaces (28, 29) face in opposite directions.

6. The vessel stabilizer of claim 5, wherein the base unit (10) comprises a first base protrusion (11a) and the drive unit comprises a first drive protrusion (21a), wherein the first insulation element (30) is delimited by the first base protrusion in a first radial direction and by the first drive protrusion in the opposite direction, wherein the first base protrusion and the first drive protrusion are arranged in first and second planes perpendicular to the axial direction of the output element (221), and not in contact with the first insulation element (30) in the region between the first and second planes.

7. The vessel stabilizer of claim 5 or 6, wherein the base unit (10) comprises a second base protrusion (11b) and the drive unit comprises a second drive protrusion (21b), wherein the second insulation element (40) is delimited by the second base protrusion in a first radial direction and by the second drive protrusion in the opposite direction, wherein the second base protrusion and the second drive protrusion are arranged in third and fourth planes perpendicular to the axial direction of the output element (221), and not in contact with the second insulation element (40) in the region between the third and fourth planes.

8. The vessel stabilizer of any of claims 5 to 7, wherein the any of the first base protrusion, second base protrusion, first drive protrusion and second drive protrusion are inclined in the axial direction of the output element (221).

9. The vessel stabilizer of any of the claims above, the vessel stabilizer comprises one or more first support elements (31), arranged in grooves or slits facing each other in the base unit (10) and the drive unit (20) in a plane perpendicular to a rotational axis of the output element.

10. The vessel stabilizer of any of the claims above, a stiffness between the drive unit (20) and the base unit (10) is configured to increase with increasing torque on the drive unit relative to the base unit (10) in the axial or vertical direction.

11. The vessel stabilizer of claim 10, wherein the vessel stabilizer comprises one or more second support elements (32), wherein the one or more second support element (32) has a higher stiffness than the first and or second insulation element (30, 40).

12. The vessel stabilizer of any of the claims above, wherein a stiffness between the drive unit (20) and the base unit (10) is configured to increase with increasing torque on the drive unit relative to the base unit (10) in the radial direction.

13. The vessel stabilizer of any of the claims above, wherein first/and or second insulation element (30, 40) is/are configured to be arranged permanently compressed between the drive unit (20) and the base unit (10).

14. The vessel stabilizer of claim 13, wherein the first insulation element (30) is compressed according to any of the following ranges; 30 - 80%, 40 - 70% or 50 - 60% of its static load limit.

15. The vessel stabilizer of any of the claims above, wherein the first and/or second insulation element (30, 40) is/are made from an elastomer with a closed cellular pore structure.

16. A vessel stabilizer (1) comprising
- a drive unit (20) comprising;
- a motor (211) and an output element (221), wherein the motor (211) is configured to rotationally drive the output element (221) and the output element (221) is configured to be fixed to a stabilizer element outside a hull of a vessel, and
- a strain wave gear system (23) comprising a wave generator (231), a flexible spline (232) and a fixed spline (233),
**characterized in that**
the drive unit (20) comprises
- an upper inner part (210) comprising the motor (211) and the wave generator (231), and
- a lower inner part (220) comprising the output element (221), the flexible spline (232) and the fixed spline (233), wherein the fixed spline (233) is fixed to the output element (221), and the upper inner part (210) is configured to be removably assembled to the lower inner part (220) from inside the hull.

17. The vessel stabilizer of claim 16, wherein the output element (221) is rotationally supported by upper and lower bearings (222, 223) arranged in the lower inner part (220) of the drive unit (20), and the wave generator (231) is arranged between the upper and lower bearings (222, 223) when the drive unit (20) is assembled.

18. The vessel stabilizer of claim 16 or 17, wherein, the upper inner part (210) comprises an inner shaft (212) comprising a rotor section (212a) with extended diameter fixed to a rotor (211a) of the electric motor (211), wherein the inner shaft is further fixed to the wave generator (231), and wherein the inner shaft (212) is supported in the upper inner part (210) by upper and middle rotational bearings (213 ,214 ) arranged above and below the rotor section (212a).

19. The vessel stabilizer of claim 18, wherein the inner shaft (212) is supported in the lower inner part (220) by a lower rotational bearing (215) arranged below the wave generator (231), wherein the lower rotational bearing (215) is longitudinally fixed to the inner shaft (212) and removably assembled with the upper inner part (220).

20. The vessel stabilizer of any of claims 16 to 19, wherein the upper inner part (210) comprises a brake element (216) arranged on the inner shaft (212) between the wave generator (231) and the rotor section (212a) and configured to act on the lower side of the rotor section to brake or lock the inner shaft as needed.

## Patentansprüche

1. Schiffsstabilisator (1), umfassend:
- eine Basiseinheit (10), die dazu konfiguriert ist, fest an einem Rumpf (100) des Schiffs angebracht zu sein,
- eine Antriebseinheit (20), umfassend einen Motor (211) und ein Ausgabeelement (221), wobei der Motor (211) dazu konfiguriert ist, das Ausgabeelement drehbar anzutreiben und das Ausgabeelement (221) dazu konfiguriert ist, an einem Stabilisatorelement (221) außerhalb des Rumpfs befestigt zu sein,
**gekennzeichnet dadurch, dass**
- ein erstes Isolationselement (30) zwischen der Basiseinheit (10) und der Antriebseinheit (20) angeordnet ist, wobei die Basiseinheit durch das erste Isolationselement (30) schwingungsmäßig von der Antriebseinheit isoliert ist.

2. Schiffsstabilisator nach Anspruch 1, wobei die Basiseinheit (10) ein Durchloch für die Antriebseinheit (20) und eine erste Basisfläche (18) um das Durchloch herum aufweist, wobei die Antriebseinheit (20) eine erste Antriebsfläche (28) entlang dem Umfang der Antriebseinheit umfasst, und wobei die erste Basisfläche (18) und die erste Antriebsfläche (28) einander zugewandt sind, wobei das erste Isolationselement (30) zwischen der ersten Basisfläche (18) und der ersten Antriebsfläche (28) angeordnet ist.

3. Schiffsstabilisator nach Anspruch 1 oder 2, wobei die erste Basisfläche (18) und die erste Antriebsfläche (28) sich in einer ersten Richtung parallel zu der Drehachse des Ausgabeelements (221) überlappen.

4. Schiffsstabilisator nach Anspruch 2 oder 3, umfassend ein zweites Isolationselement (40), das zwischen der Basiseinheit (10) und der Antriebseinheit (20) angeordnet ist, wobei die Basiseinheit durch das erste und das zweite Isolationselement (30, 40) schwingungsmäßig von der Antriebseinheit isoliert ist.

5. Schiffsstabilisator nach Anspruch 4, wobei die Basiseinheit (10) ein Durchloch für die Antriebseinheit (20) und eine erste Basisfläche (18) um das Durchloch herum aufweist, wobei die Antriebseinheit (20) eine zweite Antriebsfläche (28) entlang dem Umfang der Antriebseinheit umfasst, wobei die zweite Basisfläche (19) und die zweiten Antriebsflächen (29) einander zugewandt sind, wobei das zweite Isolationselement (40) zwischen der zweiten Basisfläche (19) und der zweiten Antriebsfläche (29) angeordnet sind, wobei die zweite Basisfläche (19) und die zweite Antriebsfläche (29) sich in einer ersten Richtung parallel zu der Drehachse des Ausgabeelements (221) überlappen, wobei die erste und die zweite Basisfläche (18, 19) in entgegengesetzte Richtungen gewandt sind, und wobei die erste und die zweite Antriebsfläche (28, 29) in entgegengesetzte Richtungen gewandt sind.

6. Schiffsstabilisator nach Anspruch 5, wobei die Basiseinheit (10) einen ersten Basisvorsprung (11a) umfasst und die Antriebseinheit einen ersten Antriebsvorsprung (21a) umfasst, wobei das erste Isolationselement (30) durch den ersten Basisvorsprung in eine erste radiale Richtung und durch den ersten Antriebsvorsprung in die entgegengesetzte Richtung begrenzt ist, wobei der erste Basisvorsprung und der erste Antriebsvorsprung in einer ersten und einer zweiten Ebene senkrecht zu der axialen Richtung des Ausgabeelements (221) angeordnet sind, und in der Region zwischen der ersten und der zweiten Ebene nicht in Kontakt mit dem ersten Isolationselement (30) sind.

7. Schiffsstabilisator nach Anspruch 5 oder 6, wobei die Basiseinheit (10) einen zweiten Basisvorsprung (11b) umfasst und die Antriebseinheit einen zweiten Antriebsvorsprung (21b) umfasst, wobei das zweite Isolationselement (40) durch den zweiten Basisvorsprung in eine erste radiale Richtung und durch den zweiten Antriebsvorsprung in die entgegengesetzte Richtung begrenzt ist, wobei der zweite Basisvorsprung und der zweite Antriebsvorsprung in einer dritten und einer vierten Ebene senkrecht zu der axialen Richtung des Ausgabeelements (221) angeordnet sind, und in der Region zwischen der dritten und der vierten Ebene nicht in Kontakt mit dem zweiten Isolationselement (40) sind.

8. Schiffsstabilisator nach einem der Ansprüche 5 bis 7, wobei jegliche aus dem ersten Basisvorsprung, dem zweiten Basisvorsprung, dem ersten Antriebsvorsprung und dem zweiten Antriebsvorsprung in die axiale Richtung des Ausgabeelements (221) geneigt sind.

9. Schiffsstabilisator nach einem der obigen Ansprüche, wobei der Schiffsstabilisator ein oder mehrere erste Trägerelemente (31) umfasst, die in Rillen oder Schlitzen, die einander in der Basiseinheit (10) und der Antriebseinheit (20) zugewandt sind, in einer Ebene senkrecht zu einer Drehachse des Ausgabeelements angeordnet sind.

10. Schiffsstabilisator nach einem der obigen Ansprüche, wobei eine Steifheit zwischen der Antriebseinheit (20) und der Basiseinheit (10) dazu konfiguriert ist, mit zunehmendem Drehmoment an der Antriebseinheit relativ zu der Basiseinheit (10) in der axialen oder vertikalen Richtung zuzunehmen.

11. Schiffsstabilisator nach Anspruch 10, wobei der Schiffsstabilisator ein oder mehrere zweite Trägerelemente (32) umfasst, wobei das eine oder die mehreren zweiten Trägerelemente (32) eine höhere Steifheit aufweisen als das erste und/oder das zweite Isolationselement (30, 40).

12. Schiffsstabilisator nach einem der obigen Ansprüche, wobei eine Steifheit zwischen der Antriebseinheit (20) und der Basiseinheit (10) dazu konfiguriert ist, mit zunehmendem Drehmoment an der Antriebseinheit relativ zu der Basiseinheit (10) in der radialen Richtung zuzunehmen.

13. Schiffsstabilisator nach einem der obigen Ansprüche, wobei das erste und/oder das zweite Isolationselement (30, 40) dazu konfiguriert ist/sind, dauerhaft komprimiert zwischen der Antriebseinheit (20) und der Basiseinheit (10) angeordnet zu sein.

14. Schiffsstabilisator nach Anspruch 13, wobei das erste Isolationselement (30) gemäß einem der folgenden Bereiche komprimiert ist: 30 - 80 %, 40 - 70 % oder 50 - 60 % seiner statistischen Belastungsgrenze.

15. Schiffsstabilisator nach einem der obigen Ansprüche, wobei das erste und/oder das zweite Isolationselement (30, 40) aus einem Elastomer mit einer geschlossenen zellulären Porenstruktur hergestellt ist/sind.

16. Schiffsstabilisator (1), umfassend
- eine Antriebseinheit (20), umfassend:
- einen Motor (211) und ein Ausgabeelement (221), wobei der Motor (211) dazu konfiguriert ist, das Ausgabeelement (221) drehbar anzutreiben und das Ausgabeelement (221) dazu konfiguriert ist, an einem Stabilisatorelement außerhalb des Rumpfs eines Schiffes befestigt zu sein, und
- ein Spannungswellengetriebesystem (23), umfassend einen Wellengenerator (231), einen flexiblen Keil (232) und einen festen Keil (233),
**gekennzeichnet dadurch, dass** die Antriebseinheit (20) Folgendes umfasst
- einen oberen Innenteil (210), umfassend den Motor (211) und den Wellengenerator (231), und
- einen unteren Innenteil (220), umfassend das Ausgabeelement (221), den flexiblen Keil (232) und den festen Keil (233), wobei der feste Keil (233) an dem Ausgabeelement (221) befestigt ist, und der obere Innenteil (210) dazu konfiguriert ist, abnehmbar an dem unteren Innenteil (220) von der Innenseite des Rumpfs aus montiert zu sein.

17. Schiffsstabilisator nach Anspruch 16, wobei das Ausgabeelement (221) drehbar von oberen und unteren Lagern (222, 223) getragen wird, die in dem unteren Innenteil (220) der Antriebseinheit (20) angeordnet sind, und der Wellengenerator (231) zwischen den oberen und den unteren Lagern (222, 223) angeordnet ist, wenn die Antriebseinheit (20) montiert ist.

18. Schiffsstabilisator nach Anspruch 16 oder 17, wobei der obere Innenteil (210) eine Innenwelle (212) umfasst, die einen Rotorabschnitt (212a) mit erweitertem Durchmesser umfasst, der an einem Rotor (211a) des Elektromotor (211) befestigt ist, wobei die Innenwelle ferner an dem Wellengenerator (231) befestigt ist, und wobei die Innenwelle (212) in dem oberen Innenteil (210) von oberen und mittleren Drehlagern (213, 214) getragen wird, die oberhalb und unterhalb des Rotorabschnitts (212a) angeordnet sind.

19. Schiffsstabilisator nach Anspruch 18, wobei die Innenwelle (212) in dem unteren Innenteil (220) von einem unteren Drehlager (215) getragen wird, das unterhalb des Wellengenerators (231) angeordnet ist, wobei das untere Drehlager (215) längs an der Innenwelle (212) befestigt und abnehmbar an dem oberen Innenteil (220) montiert ist.

20. Schiffsstabilisator nach einem der Ansprüche 16 bis 19, wobei der obere Innenteil (210) ein Bremselement (216) umfasst, das auf der Innenwelle (212) zwischen dem Wellengenerator (231) und dem Rotorabschnitt (212a) angeordnet und dazu konfiguriert ist, auf der unteren Seite des Rotorabschnitts dazu zu wirken, die Innenwelle nach Bedarf zu bremsen oder zu verriegeln.

## Revendications

1. Stabilisateur de navire (1) comprenant :
- une unité de base (10) configurée pour être montée de manière fixe sur une coque (100) du navire,
- une unité d'entraînement (20) comprenant un moteur (211) et un élément de sortie (221), dans laquelle le moteur (211) est configuré pour entraîner en rotation l'élément de sortie (221), et l'élément de sortie (221) est configuré pour être fixé à un élément stabilisateur à l'extérieur de la coque,
**caractérisé en ce que**
- un premier élément d'isolation (30) est disposé entre l'unité de base (10) et l'unité d'entraînement (20), et dans lequel l'unité de base est isolée sur le plan des vibrations de l'unité d'entraînement par le premier élément d'isolation (30).

2. Stabilisateur de navire de la revendication 1, dans lequel l'unité de base (10) présente un trou traversant pour l'unité d'entraînement (20) et une première surface de base (18) autour du trou traversant, dans lequel l'unité d'entraînement (20) comprend une première surface d'entraînement (28) le long du périmètre de l'unité d'entraînement, et dans lequel la première surface de base (18) et la première surface d'entraînement (28) se font face, dans lequel le premier élément d'isolation (30) est disposé entre la première surface de base (18) et la première surface d'entraînement (28).

3. Stabilisateur de navire de la revendication 1 ou 2, dans lequel la première surface de base (18) et la première surface d'entraînement (28) se chevauchent dans une première direction parallèle à l'axe de rotation de l'élément de sortie (221).

4. Stabilisateur de navire de la revendication 2 ou 3, comprenant un deuxième élément d'isolation (40) disposé entre l'unité de base (10) et l'unité d'entraînement (20), dans lequel l'unité de base est isolée sur le plan des vibrations de l'unité d'entraînement par les premier et deuxième éléments d'isolation (30, 40).

5. Stabilisateur de navire de la revendication 4, dans lequel l'unité de base (10) présente un trou traversant pour l'unité d'entraînement (20) et une première surface de base (18) autour du trou traversant, dans lequel l'unité d'entraînement (20) comprend une deuxième surface d'entraînement (28) le long du périmètre de l'unité d'entraînement, dans lequel la deuxième surface de base (19) et la deuxième surface d'entraînement (29) se font face, dans lequel le deuxième élément d'isolation (40) est disposé entre la deuxième surface de base (19) et la deuxième surface d'entraînement (29), dans lequel la deuxième surface de base (19) et la deuxième surface d'entraînement (29) se chevauchent dans une première direction parallèle à l'axe de rotation de l'élément de sortie (221), dans lequel les première et deuxième surfaces de base (18, 19) sont orientées dans des directions opposées, et dans lequel les première et deuxième surfaces d'entraînement (28, 29) sont orientées dans des directions opposées.

6. Stabilisateur de navire de la revendication 5, dans lequel l'unité de base (10) comprend une première saillie de base (11a) et l'unité d'entraînement comprend une première saillie d'entraînement (21a), dans lequel le premier élément d'isolation (30) est délimité par la première saillie de base dans une première direction radiale et par la première saillie d'entraînement dans la direction opposée, dans lequel la première saillie de base et la première saillie d'entraînement sont disposées dans des premier et deuxième plans perpendiculaires à la direction axiale de l'élément de sortie (221), et ne sont pas en contact avec le premier élément d'isolation (30) dans la région entre les premier et deuxième plans.

7. Stabilisateur de navire de la revendication 5 ou 6, dans lequel l'unité de base (10) comprend une deuxième saillie de base (11b) et l'unité d'entraînement comprend une deuxième saillie d'entraînement (21b), dans lequel le deuxième élément d'isolation (40) est délimité par la deuxième saillie de base dans une première direction radiale et par la deuxième saillie d'entraînement dans la direction opposée, dans lequel la deuxième saillie de base et la deuxième saillie d'entraînement sont disposées dans des troisième et quatrième plans perpendiculaires à la direction axiale de l'élément de sortie (221), et ne sont pas en contact avec le deuxième élément d'isolation (40) dans la région située entre les troisième et quatrième plans.

8. Stabilisateur de navire de l'une quelconque des revendications 5 à 7, dans lequel l'une quelconque des première saillie de base, deuxième saillie de base, première saillie d'entraînement et deuxième saillie d'entraînement est inclinée dans la direction axiale de l'élément de sortie (221).

9. Stabilisateur de navire de l'une quelconque des revendications précédentes, le stabilisateur de navire comprend un ou plusieurs premiers éléments de support (31), disposés dans des rainures ou fentes se faisant face dans l'unité de base (10) et l'unité d'entraînement (20) dans un plan perpendiculaire à un axe de rotation de l'élément de sortie.

10. Stabilisateur de navire de l'une quelconque des revendications précédentes, dans lequel la raideur entre l'unité d'entraînement (20) et l'unité de base (10) est configurée pour augmenter avec le couple croissant exercé sur l'unité d'entraînement par rapport à l'unité de base (10) dans la direction axiale ou verticale.

11. Stabilisateur de navire de la revendication 10, dans lequel le stabilisateur de navire comprend un ou plusieurs deuxièmes éléments de support (32), dans lequel lesdits un ou plusieurs deuxièmes éléments de support (32) présentent une raideur supérieure à celle du premier et/ou du deuxième élément d'isolation (30, 40).

12. Stabilisateur de navire de l'une quelconque des revendications précédentes, dans lequel la raideur entre l'unité d'entraînement (20) et l'unité de base (10) est configurée pour augmenter avec le couple croissant exercé sur l'unité d'entraînement par rapport à l'unité de base (10) dans la direction radiale.

13. Stabilisateur de navire de l'une quelconque des revendications précédentes, dans lequel le premier et/ou le deuxième élément d'isolation (30, 40) est/sont configuré(s) pour être disposé(s) de manière à être comprimé en permanence entre l'unité d'entraînement (20) et l'unité de base (10).

14. Stabilisateur de navire de la revendication 13, dans lequel le premier élément d'isolation (30) est comprimé selon l'une quelconque des plages suivantes : 30 - 80%, 40 - 70% ou 50 - 60% de sa limite de charge statique.

15. Stabilisateur de navire de l'une quelconque des revendications précédentes, dans lequel le premier et/ou le deuxième élément d'isolation (30, 40) est/sont constitué(s) d'un élastomère à structure cellulaire à pores fermés.

16. Stabilisateur de navire (1) comprenant
- une unité d'entraînement (20) comprenant :
- un moteur (211) et un élément de sortie (221), dans lequel le moteur (211) est configuré pour entraîner en rotation l'élément de sortie (221), et l'élément de sortie (221) est configuré pour être fixé à un élément stabilisateur à l'extérieur d'une coque d'un navire, et
- un système d'engrenage à onde de déformation (23) comprenant un générateur d'onde (231), une couronne dentée flexible (232) et une couronne dentée fixe (233),
**caractérisé en ce que** l'unité d'entraînement (20) comprend
- une partie intérieure supérieure (210) comprenant le moteur (211) et le générateur d'onde (231), et
- une partie intérieure inférieure (220) comprenant l'élément de sortie (221), la couronne dentée flexible (232) et la couronne dentée fixe (233), dans lequel la couronne dentée fixe (233) est fixée à l'élément de sortie (221), et la partie intérieure supérieure (210) est configurée pour être assemblée de manière amovible à la partie intérieure inférieure (220) depuis l'intérieur de la coque.

17. Stabilisateur de navire de la revendication 16, dans lequel l'élément de sortie (221) est supporté en rotation par des roulements supérieur et inférieur (222, 223) disposés dans la partie intérieure inférieure (220) de l'unité d'entraînement (20), et le générateur d'onde (231) est disposé entre les roulements supérieur et inférieur (222, 223) lorsque l'unité d'entraînement (20) est assemblée.

18. Stabilisateur de navire de la revendication 16 ou 17, dans lequel la partie intérieure supérieure (210) comprend un arbre intérieur (212) comprenant une section de rotor (212a) à diamètre élargi fixée à un rotor (211a) du moteur électrique (211), dans lequel l'arbre intérieur est en outre fixé au générateur d'onde (231), et dans lequel l'arbre intérieur (212) est supporté dans la partie intérieure supérieure (210) par des roulements rotatifs supérieur et médian (213, 214) disposés au-dessus et en dessous de la section de rotor (212a).

19. Stabilisateur de navire de la revendication 18, dans lequel l'arbre intérieur (212) est supporté dans la partie intérieure inférieure (220) par un roulement rotatif inférieur (215) disposé sous le générateur d'onde (231), dans lequel le roulement rotatif inférieur (215) est fixé longitudinalement à l'arbre intérieur (212) et assemblé de manière amovible avec la partie intérieure supérieure (220).

20. Stabilisateur de navire de l'une quelconque des revendications 16 à 19, dans lequel la partie intérieure supérieure (210) comprend un élément de freinage (216) disposé sur l'arbre intérieur (212) entre le générateur d'onde (231) et la section de rotor (212a) et configuré pour agir sur la face inférieure de la section de rotor afin de freiner ou bloquer l'arbre intérieur selon les besoins.
